Europäisches Patentamt

European Patent Office

Office européen des brevets

(19)

(11) Veröffentlichungsnummer: **0 156 124**

**A2**

(12) ·**EUROPÄISCHE PATENTANMELDUNG**

(21) Anmeldenummer: 85101130.4

(22) Anmeldetag: 04.02.85

(51) Int. Cl.⁴: **G 02 B 6/38**
G 02 B 6/28

(30) Priorität: 26.03.84 DE 3411121

(43) Veröffentlichungstag der Anmeldung:
02.10.85 Patentblatt 85/40

(84) Benannte Vertragsstaaten:
AT BE CH FR GB IT LI LU NL SE

(71) Anmelder: Schleifring und Apparatebau GmbH
Am Hardtanger 10
D-8080 Fürstenfeldbruck(DE)

(72) Erfinder: Mainka, Joachim
Friedrich-Ebert-Strasse 5
D-8080 Fürstenfeldbruck(DE)

(74) Vertreter: Patentanwälte Beetz sen. - Beetz jun. Timpe -
Siegfried - Schmitt-Fumian
Steinsdorfstrasse 10
D-8000 München 22(DE)

(54) Vorrichtung zum Übertragung von Lichtsignalen zwischen zwei Bauteilen.

(57) Gegenstand der Erfindung ist eine Vorrichtung zur Übertragung von Lichtsignalen zwischen zwei Bauteilen, von denen mindestens eines um die gemeinsame Achse rotiert, bestehend aus einem zylindrischen Gehäuse, in dem ein Stator und ein mit dem rotierenden Bauteil gekuppelter Rotor angeordnet sind, die Anschlüsse für Lichtwellenleiter aufweisen. Zur Erzielung von praktisch fehlerfreien Abbildungen ist im Gehäuse in der optischen Achse eine Optik (6, 18) angeordnet. Für eine Mehrkanal-Übertragung enthält die Optik ein mit halber Winkelgeschwindigkeit des Rotors (15) umlaufendes optisches Wendeelement (47), das auf optischem Wege eine Bildumkehr bewirkt. Durch die optische Bildumkehr und die halbe Rotordrehzahl dieses Wendelementes werden die durch ein bestimmtes Lichtleiterbündel zugeführten Lichtsignale ständig und unabhängig von der jeweiligen Rotordrehzahl auf ein einziges empfängerseitiges Lichtleiterbündel übertragen.

Fig.4

EP 0 156 124 A2

0156124

- 1 -

Schleifring und Apparatebau GmbH
D-8o8o Fürstenfeldbruck
-----------------------------------------------

Vorrichtung zur Übertragung von Lichtsignalen
zwischen zwei Bauteilen

Die Erfindung betrifft eine Vorrichtung zur Übertragung
von Lichtsignalen zwischen zwei Bauteilen, von denen
mindestens eines um die gemeinsame Achse rotiert, bestehend aus einem zylindrischen Gehäuse, in dem ein
Stator und ein mit dem rotierenden Bauteil gekuppelter Rotor angeordnet sind, die Anschlüsse für Lichtwellenleiter aufweisen.

Bei der Signalübertragung gewinnen Lichtwellenleiter
in Form von einzelnen oder gebündelten Glasfasern aufgrund einer Vielzahl von Vorzügen gegenüber elektrischen Leitern eine zunehmende Bedeutung. Neben der
hohen möglichen Datendichte liegt einer der für die
Praxis wesentlichen Vorzüge von optischen Übertragungssystemen in ihrer Unempfindlichkeit gegenüber elektromagnetischen Störfeldern, die beispielsweise von in
der Nähe liegenden elektrischen Leitern erzeugt werden. Insbesondere in der Wehrtechnik spielt die Ausschaltung der Einflüsse von elektromagnetischen Störfeldern eine wichtige Rolle, da rein elektromagnetisch
arbeitende Signalübertragungssysteme durch Gezielt-Störsender und durch die bei außeratmosphärischen Nuklearexplosionen auftretenden EMP's (Elektro-Magnetischer
Puls).

853-(x2263)-Sd-E

beeinflußt und ggf. außer Funktion gesetzt werden können, falls sie nicht durch aufwendige Maßnahmen gegen derartige Störungen geschützt werden. Schwierigkeiten können auch bei der digitalen oder analogen Übertragung von elektrischen Signalen bei komplexen Steuerungen für Industrieanlagen auftreten, bei denen zum einen relativ lange Übertragungswege zurückzulegen sind und zum anderen eine Vielzahl von leistungsfähigen elektrischen Maschinen in Betrieb sind, die entsprechend starke Störfelder erzeugen.

Es ist bereits eine als optischer Drehkoppler bezeichnete Vorrichtung der beanspruchten Gattung der Firma Schäfter u. Kirchhoff bekannt, bei der in einem zylindrischen Gehäuse gleichachsig ein Stator und ein mit dem umlaufenden Bauelement gekoppelter Rotor angeordnet sind. Je ein Lichtwellenleiterbündel in Form eines Glasfaserstranges ist in der Mittelachse an den Rotor und an den Stator angeschlossen. Die einzelnen Lichtwellenleiter (Glasfasern) sind jeweils im Stator und im Rotor zu einem Ring aufgefächert, wobei die ringförmig verteilten Leiterenden sich an den benachbarten Stirnseiten mit einem gewissen Abstand gegenüberliegen und in je einem durchscheinenden Kunststoffring eingebettet sind. Der wesentliche Nachteil dieser bekannten Vorrichtung liegt einmal in der sich durch die ringförmige Auffächerung der Leiterbündel ergebenden großen Lichtstreuung, die zu einer erheblichen Abnahme der Stärke bzw. Intensität der übertragenden Lichtsignale beim Übergang vom Stator-Ring auf den Rotor-Ring führt und zum anderen auch in Übertragungsungenauigkeiten, die durch die unterschiedliche Länge der aufgefächerten Einzelleiter verursacht wird. Schließlich ist diese bekannte Vorrichtung zur Mehrkanal-Übertragung nicht bzw. nur bedingt geeignet, da die Leiterbündel zu gesonderten, konzentrisch verlaufenden Ringen aufgefächert werden müßten, wobei erhebliche radiale Abstände zwischen den einzelnen Ringen und zusätzliche Abschirmungen vorgesehen werden müssen, um gegenseitige Beeinflussungen der verschiedenen Kanalringe zu vermeiden. Schließlich sind diese bekannten Vorrichtungen voluminös, schwer und kostspielig, da die gleichmäßige Auffächerung der Lichtwellenleiter bzw. Glasfasern der einzelnen Bündel sowie die Einbettung der Glasfaserenden in einen Kunststoffring mit hoher Sorgfalt vorgenommen werden müssen.

Aufgabe der Erfindung ist es, eine kompäktere Vorrichtung der angegebenen Gattung zu schaffen, die eine genaue und weitgehend fehlerfreie Übertragung der Lichtsignale von einem ortsfesten auf ein rotierendes Bauteil - und umgekehrt - ermöglicht.

Diese Aufgabe wird erfindungsgemäß dadurch gelöst, daß im Gehäuse zwischen den Enden der Lichtwellenleiter eine Optik angeordnet ist, deren eingangs- und ausgangsseitige Brennebenen etwa in der Eingangs- und der Ausgangsebene der Lichtwellenleiter liegen.

Mit einer erfindungsgemäß ausgebildeten Vorrichtung lassen sich nahezu alle Signalarten von rotierenden Maschinenteilen, wie insbesondere Gleichspannungssignale von Temperaturfühlern und Druckaufnehmern, Wechselspannungen von Synchrongebern, Impulse von Zählern und Codierern oder Videosignale von Fernsehkameras oder CCD-Zeilensensoren nach Umwandlung in Lichtsignale übertragen. Dabei kann die Umwandlung der ankommenden elektromagnetischen Signale auch durch innerhalb des Gehäuses vorgesehene Leucht- bzw. Fotodioden mit Verstärkern in Lichtsignale erfolgen. Beispielsweise können als Sender/Empfänger schnelle Infrarot-LEDs/p-i-n-Fotodioden eingesetzt werden, die mit den dazugehörigen Verstärkern einfach auf die Faser-Koppelstrecken aufgesteckt werden. Für hohe Frequenzanforderungen können auch Laserdioden und Avalanche-Fotodioden eingebaut werden. Durch die Anordnung der Optik in der optischen Achse werden Lichtstromschwankungen bei der Rotation, die durch Fehler in der Faseranordnung, durch exzentrische Ringlagerung und durch Inhomogenitäten der Halbleitersender und -empfänger hervorgerufen werden könnten, auf einen Minimalwert verringert. Um restliche Amplitudenschwankungen auszugleichen, kann eine automatische Verstärkungsregelung eingesetzt werden, die das herausgeführte Startsignal nach einem zweimaligen Durchlauf der Optik benutzt, um die Amplitudenschwankungen auf ca. 5 % ihres Anfangswertes zu mindern.

Bei einer konstruktiv einfachen Vorrichtung zur Einkanal-Übertragung kann die Optik je ein mehrlinsiges Objektiv im Rotor und im Stator enthalten, deren Brennpunkte in der Eingangsebene des zugeordneten, in der Drehachse angeschlossenen Lichtwellenleiters liegen, d. h. der Brennpunkt des Stator-Objektivs befindet sich in der Eintrittsebene des an den Stator angeschlossenen ortsfesten Lichtwellenleiters und der Brennpunkt des in den Rotor eingebauten Objektivs liegt in der Eintrittsebene des an den Rotor angeschlossenen Lichtwellenleiters.

Eine ähnlich wirkende besonders einfach aufgebaute Vor-

richtung zur Einkanal-Übertragung enthält statt der beiden Objektive zwei Hohlspiegel oder Plankonvexlinsen, die mit ihren Bogenflächen nach außen weisend im Strahlengang angeordnet sind. Die Bogenflächen sind bis auf eine kleine zentrale Durchtrittsöffnung verspiegelt, wobei ihre Krümmung so ausgelegt ist, daß sich die Brennweiten ineinander verschachteln und ihre Brennpunkte jeweils in der Eingangs- bzw. Ausgangsebene des einen bzw. des anderen Lichtwellenleiters liegen. Diese Anordnung hat gegenüber der Verwendung von zwei Objektiven den Vorteil eines geringeren "Linsenaufwands" und einer kürzeren Baulänge. Bei kurzen Brennweiten der Hohlspiegel treten nur minimale sphärische Abbildungsfehler auf. So beträgt bei Lichtwellenleitern (Gradientenfasern) von 0,85 mm Durchmesser der durch sphärische Aberration bedingte unscharfe Kreis nur ca. 0,08 mm.

Von besonderer praktischer Bedeutung ist eine weitere Ausgestaltung der erfindungsgemäßen Vorrichtung zur Mehrkanal-Übertragung, deren Optik ein optisches Wendeelement enthält, das in der optischen Achse zwischen dem Rotor und dem Stator angeordnet ist und mit der halben Drehzahl bzw. Winkelgeschwindigkeit des Rotors umläuft. An den äußeren Stirnseiten des Rotors und des Stators können mehrere Leiterbündel - zweckmäßig unter Verwendung von besonderen Anschlußbuchsen - angeschlossen werden, wobei die den in bestimmter Ordnung positionierten Leiterbündeln zugeführten Lichtsignale durch die Wirkung des optischen Wendeelementes und dessen Rotation mit halber Drehzahl an die in der gleichen relativen Lage positionierten ausgangsseitigen Lichtleiterbündel übertragen werden. Diese Ausführung stellt einen optischen Mehrkanal-Drehkoppler dar, der die gleichzeitige Übertragung von mehreren unterschiedlichen Signalarten nach ihrer Wandlung in Lichtsignale ermöglicht.
Jeder einzelne Kanal ist zur Übertragung von Video-Signalen geeignet. Ohne Frequenz-Multiplex können mehrere
Videokanäle, Meßspannungen und/oder digitale Signale
über eine einzige Drehkupplung gleichzeitig übertragen werden. Bei der Signalwandlung im Gerät selbst werden schnelle Infrarot-LEDs/p-i-n-Fotodioden eingesetzt,
die zusammen mit ihren Verstärkern an die Stirnseiten
des Drehkopplers aufgesteckt werden können.

Besonders zweckmäßig ist die Verwendung eines sog.
Schmidt-Pechan-Prismas (vgl. Naumann; Schröder "Bauelemente der Optik"; 4. Auflg., S. 171) als optisches Wendeelement, dessen beide schrägen Seitenflächen verspiegelt sind und in dessen Spalt eine Einlage, z. B. eine
Aluminiumfolie, oder eine Verspiegelung einer der Prismenflächen mit einer Blendenöffnung (Pupille) angeordnet ist.

Als optisches Wendeelement können jedoch auch andere
geeignete Prismen oder Linsensysteme eingesetzt werden, die eine einseitige Bildumkehr bewirken.

Im folgenden werden Ausführungsbeispiele der Erfindung
anhand der Zeichnung im einzelnen beschrieben. Es zeigen:

Fig. 1          einen optischen Drehkoppler zur Ein-
                kanal-Übertragung im Axialschnitt;

Fig. 2          einen anderen optischen Drehkoppler zur Einkanal-Übertragung im Axialschnitt;

Fig. 3        schematisch den Verlauf der Lichtstrahlen bei dem Drehkoppler nach
Fig. 2;

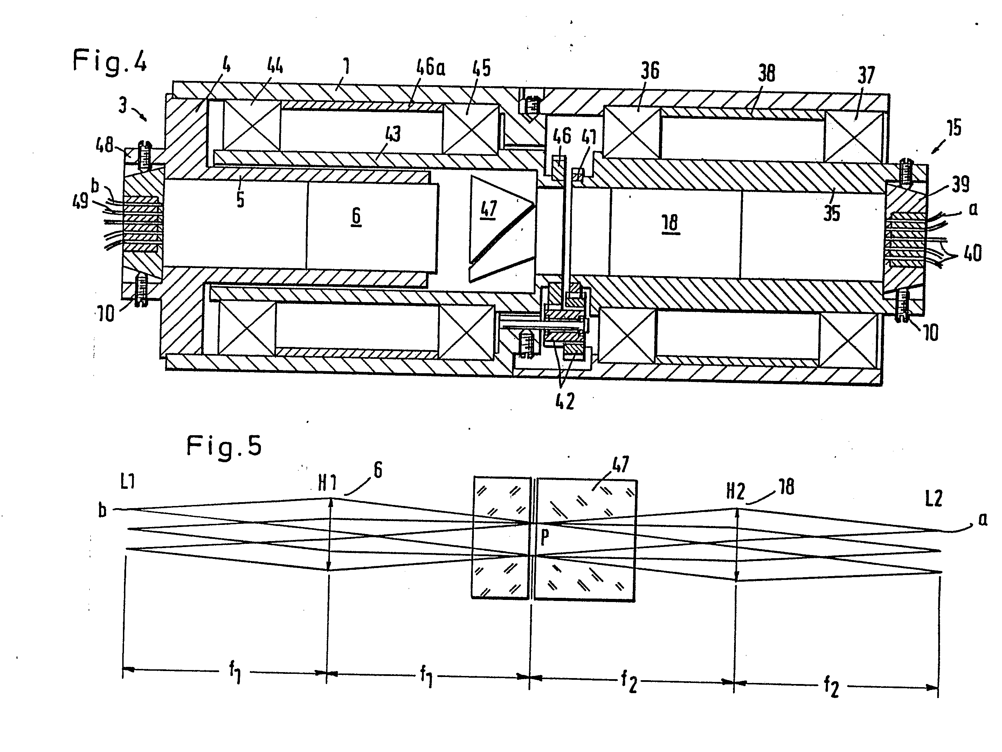

Fig. 4        einen optischen Drehkoppler zur Mehr-
kanal-Übertragung im Axialschnitt;

Fig. 5        schematisch den Strahlengang im Drehkoppler nach Fig. 4;

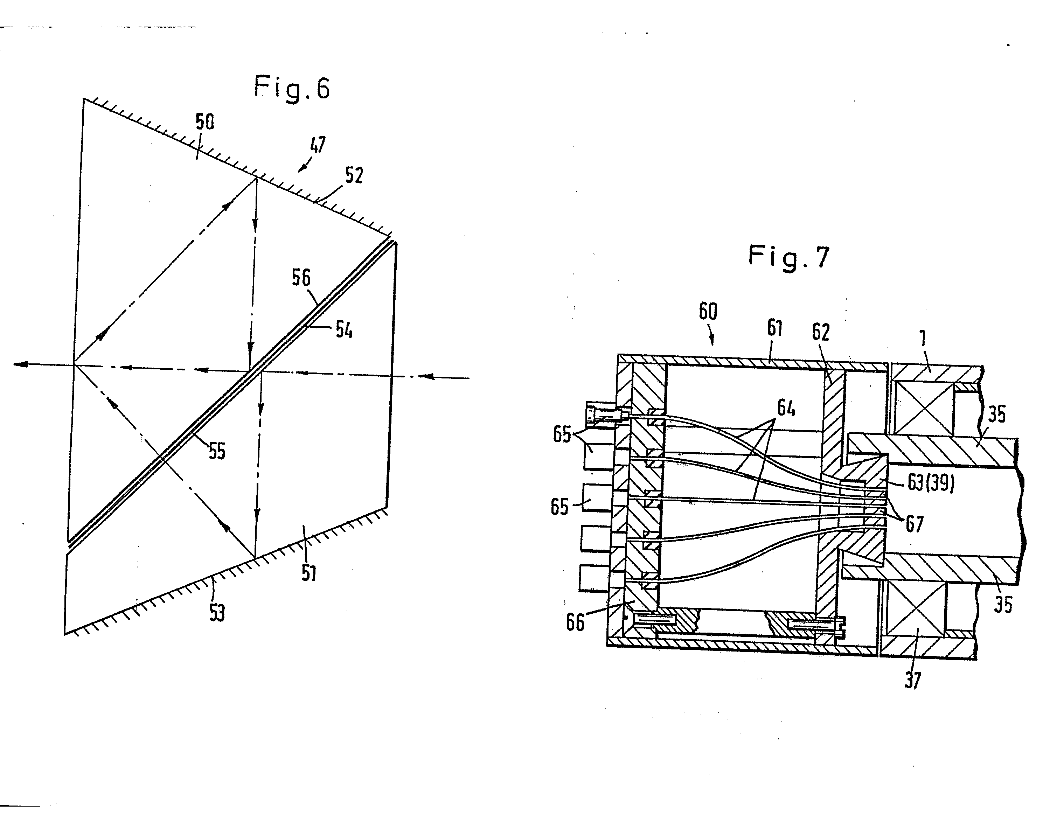

Fig. 6        eine vergrößerte Darstellung des im
Drehkoppler nach Fig. 4 verwendeten
optischen Wendeglieds;

Fig. 7        eine Mehrkanal-Anschlußmuffe für den
Drehkoppler nach Fig. 4 im Axialschnitt.

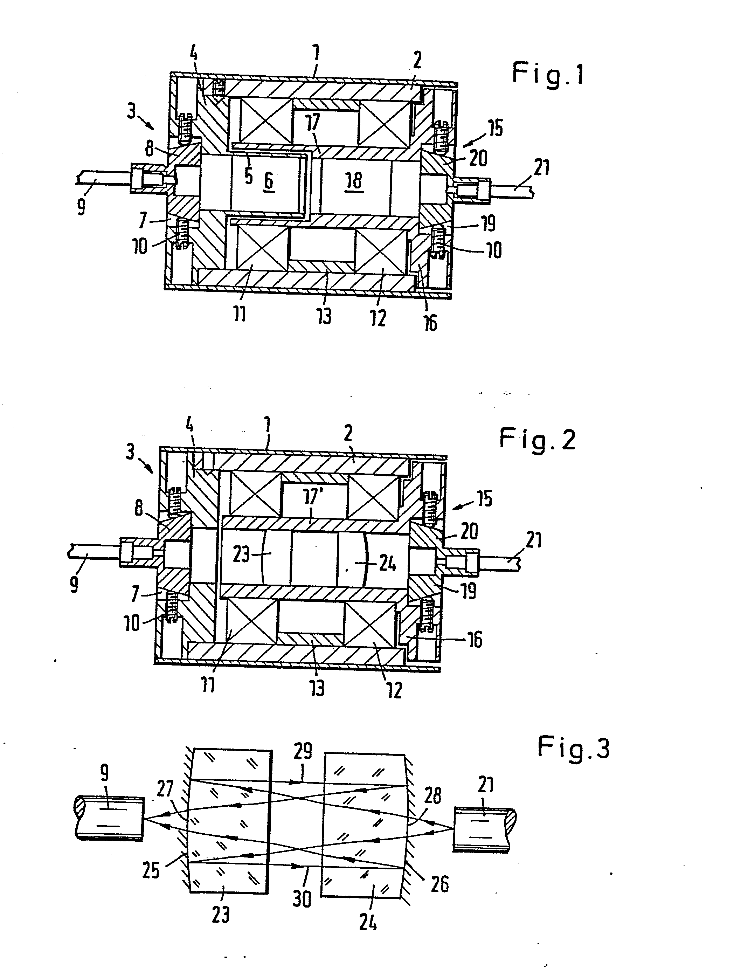

Der Einkanal-Drehkoppler nach Fig. 1 enthält ein zylindrisches Gehäuse 1, in dem ein Tragrohr 2 und an diesem ein Stator 3 befestigt sind. Der Stator 3 besteht
aus einer formsteifen Stirnplatte 4, an die ein in das
Gehäuseinnere ragender Rohrstutzen 5 anschließt. Im Rohrstutzen 5 ist ein mehrlinsiges Objektiv 6 befestigt und
in einer zylindrischen Ausnehmung 7 der Stirnplatte 4
ist eine Anschlußbuchse 8 für einen Lichtwellenleiter
9 durch Klemmschrauben 10 festgelegt.

An der Innenfläche des Tragrohres 2 sitzen zwei Präzisions-Kugellager 11, 12, die axial durch ein Distanzstück 13 auf Abstand gehalten werden. In diesen Lagern

11, 12 läuft ein Rotor 15, der aus einer formsteifen Stirnplatte 16 und einem abgesetzten Rohrstutzen 17 besteht, in welchem ein zweites Objektiv 18 gleichachsig zum Objektiv 6 festgelegt ist. In einer stirnseitigen zentralen Ausnehmung 19 sitzt eine Anschlußbuchse 20 für einen zweiten Lichtwellenleiter 21. Die beiden Anschlußbuchsen 8, 20 sind durch die Stiftschrauben 10 lösbar in den jeweiligen Ausnehmungen 7, 19 der Stator- bzw. Rotor-Stirnplatte 4, 20 festgelegt. Mit den Stiftschrauben 10 werden die Lichtwellenleiter 9, 21 auf die Rotordrehachse bzw. auf die mit dieser praktisch identische Achse zentriert.

Der optische Drehkoppler nach Fig. 2 entspricht in seinem konstruktiven Aufbau weitgehend der Ausführung nach Fig. 1, wobei gleiche Bauteile mit denselben Bezugszeichen gekennzeichnet sind. Die Statorplatte 4 weist allerdings keinen Rohransatz auf, sondern hat eine ebene innere Stirnfläche. Dementsprechend ist der Rohransatz 17 des Stators ohne Absatz ausgeführt. Statt der bei der Ausführung nach Fig. 1 verwendeten zwei Objektive 6 und 18 sind bei dem Drehkoppler nach Fig. 2 im Ansatz 17 des Rotors 15 zwei - in Fig. 3 gesondert dargestellte - Plankonvexlinsen 23, 24 befestigt, deren nach jeweils außen weisende Konvexflächen 25, 26 bis auf eine kleine zentrale Durchtrittsöffnung 27, 28 verspiegelt sind. In Fig. 3 ist der Verlauf zweier Grenz-Lichtstrahlen 29, 30 vom rotorseitigen Lichtwellenleiter 21 zum statorseitigen Lichtwellenleiter 9 dargestellt. Wie gezeigt, ist die Krümmung der beiden verspiegelten Konvexflächen und der gegenseitige Abstand der beiden Linsen 23, 24 so gewählt, daß die beiden

0156124

Brennweiten der Hohlspiegel 25, 26 bzw. der Linsen 23, 24 ineinander verschachtelt sind, was extrem kurze Längsabmessungen des Drehkopplers nach Fig. 2, 3 gegenüber der Ausführung nach Fig. 1 ermöglicht.

Der Mehrkanal-Drehkoppler nach Fig. 4 besteht ebenfalls aus einem zylindrischen Gehäuse 1, einem im Gehäuse 1 befestigten Stator 3 mit einer formsteifen Stirnplatte 4, einem Rohransatz 5 und einem darin festgelegten Objektiv 6 sowie aus einem im Gehäuse drehbar gelagerten Rotor 15, der gleichachsig zum Stator 3 ausgerichtet ist. Der Rotor 15 besteht aus einem durchgehenden Rohrstück 35, das über zwei Präzisions-Kugellager 36, 37 im Gehäuse 1 drehbar gelagert ist und mit der gleichen Drehzahl wie das umlaufende Bauteil rotiert. Im Rohrinneren sitzt ein Objektiv 18 und in einer erweiterten Ausnehmung am äußeren Rohrende ist eine Anschlußmuffe 39 für mehrere Lichtleiterbündel 40 durch Stiftschrauben 10 festgeklemmt. Das innere Rohrende trägt einen Zahnkranz 41, der mit einem auf einer gehäusefesten Welle frei drehbar gelagerten Doppel-Ritzel 42 in Eingriff steht. Koaxial zum Rohr 35 des Rotors 15 ist im Gehäuse 1 eine Hülse 43 in zwei Präzisions-Kugellagern 44, 45 mit Distanzstück 46a gelagert, auf deren in Fig. 4 rechtem, nach innen abgesetztem Endstück ein Zahnkranz 46 sitzt, der mit dem anderen Teil des Doppel-Ritzels 42 kämmt. Die beiden Zahnkränze 41, 46 und das Doppel-Ritzel 42 sind so ausgelegt, daß die Hülse 43 mit genau der halben Winkelgeschwindigkeit wie der Rotor 15 umläuft. Im Strahlengang zwischen den beiden Objektiven 6 und 18 ist in der Hülse 43 ein als Schmidt-Pechan-Prisma ausgeführtes optisches Wendeelement 47 befestigt, das in Fig. 6 im einzelnen dargestellt ist.

In der von einem Ringansatz 48 an der Statorplatte 4 begrenzten Ausnehmung ist eine Anschlußmuffe, z. B. gemäß Fig. 7, durch Stiftschrauben 10 lösbar festgelegt und zentriert.

Der Verlauf der Lichtstrahlen durch den Mehrkanal-Drehkoppler nach Fig. 4 ist in Fig. 5 dargestellt. Darin bedeuten $f_1$ und $f_2$ die jeweils gleichen Brennweiten der Objektive 6, 18; $L_1$, $L_2$ die Ausgangs- bzw. Eingangsstellen der Lichtleiterbündel, $H_1$, $H_2$ die Hauptebenen der Objektive 6, 18 und P die Blendenöffnung bzw. Pupille im Wendeprisma 47. Wie ersichtlich, liegen die äußeren Brennpunkte $L_1$ und $L_2$ der beiden Objektive 6 und 18 in der vertikalen Ebene der eingangs- bzw. ausgangsseitigen Lichtleiter 40 bzw. 49 und ihre inneren Brennpunkte in der Verbindungsebene des Wendeelements 47.

Das in Fig. 6 dargestellte Schmidt-Pechan-Prisma 47 besteht aus zwei Teilen 50, 51 und hat - wie dargestellt - einen über seine gesamte Länge gleichbleibenden Trapezquerschnitt. Die beiden schrägen Trapezflächen 52, 53 sind verspiegelt. In der Verbindungsebene befindet sich in einem Luftspalt 56 eine ggf. verspiegelte Folieneinlage 54, die eine Blendenöffnung 55 (P) aufweist und lose im Luftspalt 56 eingelegt ist.

Die in den Fig. 4 bis 6 dargestellte Vorrichtung arbeitet wie folgt:

Wenn Lichtsignale von einem umlaufenden Bauteil auf ein stationäres Bauteil über mehrere Kanäle übertragen werden sollen, werden die verschiedenartigen Lichtsignale über einzelne der Lichtleiterbündel 40 in den Rotor 15 eingeführt und in seinem Objektiv 18 fokussiert. Die Lichtstrahlen durchlaufen das optische Wendeelement 47 in der in Fig. 6 dargestellten Weise. Bei stillstehendem Wendeelement 47 ergibt sich der in Fig. 5 dargestellte Strahlenverlauf bei der gezeigten Anordnung und Auslegung der Objektive 6 und 18, wobei die Objektive 6 und 18 so ausgelegt und angeordnet sind, daß ihre inneren Brennpunkte in der Verbindungsebene, und zwar in der Blendenöffnung P, des Wendeprismas 47 liegen. Diese Anordnung ergibt somit eine optische einseitige Bildumkehr. Da erfindungsgemäß das Wendeelement 47 mit der halben Winkelgeschwindigkeit des Rotors 15 um die Mittelachse umläuft, ergibt sich durch die einseitige optische Bildumkehr im Wendeglied 47 und die mechanische Drehzahlhalbierung eine stationäre Abbildung der Lichtsignale in den einzelnen Lichtleiterbündeln 49 des Stators 3, d. h. daß z. B. das mit a gekennzeichnete Lichtbündel seine Lichtsignale bei jeder Rotordrehzahl gleichbleibend an das mit b gekennzeichnete Stator-Lichtbündel 49 überträgt (Fig. 4).

Die in Fig. 7 dargestellte Anschlußbuchse 60 bietet die einfache Möglichkeit, mehrere Lichtleiterbündel an einen Mehrkanal-Drehkoppler gemäß Fig. 4 gemeinsam anzuschließen, und zwar in gleicher Weise an den Stator 3 und - wie dargestellt - an den Rotor 15. Die Anschlußbuchse 60 besteht aus einem zylindrischen Gehäuse 61, mit einer vorderen Stirnwand 66 und einer rückwärtigen Querwand 62, an der ein sich konisch erweiternder Klemmansatz 63 (39) angeformt ist. Im Inneren der Buchse 60
erstrecken sich mehrere gleichlange Lichtleiterbündel
64 von äußeren Steckanschlüssen 65 zu inneren Ein- bzw.
Ausgängen 67, die einerseits in der äußeren Stirnwand
66 und andererseits in dem konischen Ansatz 63 festgelegt sind. Eine in dieser Weise ausgebildete Anschlußbuchse ermöglicht das problemlose Verbinden mehrerer
äußerer Lichtleiterbündel mit dem Drehkoppler.

Die Erfindung ist nicht auf die dargestellten und beschriebenen Ausführungen beschränkt. Vielmehr können
statt der dargestellten optischen Elemente auch andere optische Bauteile verwendet werden. Die Plankonvexlinsen gemäß Fig. 2 bzw. die Objektive können auch einfache Hohlspiegel mit zentraler Blendenöffnung sein.
Ferner können bei den Ausführungen nach Fig. 1 und 2
die Objektive auch jeweils gemeinsam im Rotor oder im
Stator oder jeweils einzeln im Stator und im Rotor angeordnet sein.

- 1 -

A n s p r ü c h e
----------------------

1. Vorrichtung zur Übertragung von Lichtsignalen zwischen
zwei Bauteilen, von denen mindestens eines um die gemeinsame Achse rotiert, bestehend aus einem zylindrischen Gehäuse, in dem ein Stator und ein mit dem rotierenden Bauteil gekuppelter Rotor angeordnet sind,
die Anschlüsse für Lichtwellenleiter aufweisen,

d a d u r c h   g e k e n n z e i c h n e t ,

daß im Gehäuse (1) eine Optik (6, 18; 25, 26; 47) angeordnet ist, deren eingangs- und ausgangsseitige Brennebenen $L_1$; $L_2$ etwa in der Eingangs- und der Ausgangsebene der Lichtwellenleiter (9, 21; 40, 49) liegen.

2. Vorrichtung nach Anspruch 1,
dadurch gekennzeichnet,
daß die Optik aus zwei mehrlinsigen Objektiven (6; 18)
im Rotor (15) und/oder im Stator (3) besteht.

3. Vorrichtung nach Anspruch 1,
dadurch gekennzeichnet,
daß die Optik zwei zueinanderweisend in der optischen
Achse angeordnete Hohlspiegel (25, 26) enthält, die je
eine zentrale Durchtrittsöffnung (27, 28) aufweisen.

853-(x2263)-Sd-E

0156124

4. Vorrichtung nach einem der Ansprüche 1 bis 3,
dadurch gekennzeichnet,
daß die Optik ein optisches Wendeelement (47) enthält, das in der optischen Achse zwischen dem Rotor
(15) und dem Stator (3) angeordnet ist und mit der
halben Rotordrehzahl rotiert.

5. Vorrichtung nach Anspruch 4,
dadurch gekennzeichnet,
daß das Wendeelement ein Wendeprisma (47) ist.

6. Vorrichtung nach Anspruch 5,
dadurch gekennzeichnet,
daß das Wendeprisma ein Schmidt-Pechan-Prisma (47)
ist, in dessen Verbindungsspalt (53) eine Einlage
(54) mit einer Blendenöffnung (55) angeordnet ist.

7. Vorrichtung nach Anspruch 5,
dadurch gekennzeichnet,
daß das Wendeelement ein Umkehr-Zylinder-Linsensystem
enthält.

8. Vorrichtung nach einem der Ansprüche 4 bis 7,
dadurch gekennzeichnet,
daß das Wendeelement (47) zentral in einer praktisch
spielfrei im Gehäuse (1) gelagerten Hülse (43) befestigt ist, die über ein Untersetzungsgetriebe (41, 42,
46) mit dem Rotor (15) gekuppelt ist.

9. Vorrichtung nach einem der Ansprüche 4 bis 8,
dadurch gekennzeichnet,

daß mehrere Lichtwellenleiter in einer Anschlußmuffe
(60) angeschlossen sind, die über einen Steckkontakt
(39, 63) mit dem Stator (3) bzw. dem Rotor (15) verbindbar ist.

10. Vorrichtung nach Anspruch 9,
dadurch gekennzeichnet,
daß an der außenliegenden Stirnwand (66) Verbinder (65)
zum lösbaren Anschließen von Lichtwellenleitern vorgesehen sind.

11. Vorrichtung nach Anspruch 9 oder 10,
dadurch gekennzeichnet,
daß in der Anschlußmuffe (60) mehrere kurze Lichtwellenleiter (64) gleicher Länge zwischen den Verbindern (65)
und dem Steckkontakt (39, 63) angeordnet sind.

Fig.1

Fig.2

Fig.3

Fig.4

Fig.5

0156124

## Fig.6

50
47
52
56
54
55
51
53

## Fig.7

60
61
62
1
64
65
35
65
63(39)
67
66
35
37